# EUROPEAN PATENT APPLICATION

(11) **EP 4 661 447 A1**
(43) Date of publication of application: **10.12.2025**
(21) Application number: 24843225.4
(22) Date of filing: 26.03.2024
(51) Int. Cl.: H04W 4/80, H04W 4/06, H04L 67/1095, H04M 1/72409, G06F 3/16, H04R 3/12, H04W 56/00, H04W 76/14, H04W 88/02

(54) **ELECTRONIC DEVICE AND METHOD FOR SYNCHRONIZATION WITH OTHER ELECTRONIC DEVICES IN WIRELESS ENVIRONMENT**

(30) Priority: 17.07.2023 KR 20230092332; 31.07.2023 KR 20230100086; 16.10.2023 KR 20230137655
(71) Applicant: Samsung Electronics Co., Ltd., Suwon-si, Gyeonggi-do 16677 (KR)
(72) Inventor: CHEONG, Gupil, Suwon-si Gyeonggi-do 16677 (KR); KANG, Doosuk, Suwon-si Gyeonggi-do 16677 (KR); KIM, Sanghyeok, Suwon-si Gyeonggi-do 16677 (KR); YOO, Hyungseoung, Suwon-si Gyeonggi-do 16677 (KR); JIN, Juyeon, Suwon-si Gyeonggi-do 16677 (KR)
(74) Representative: Gulde & Partner
(86) International application number: PCT/KR2024/003757
(87) International publication number: WO 2025/018499

(57) **Abstract**

A first electronic device is provided. The first electronic device may comprise a microphone, a communication circuit, and at least one processor including a processing circuit. The at least one processor may be individually and/or collectively configured to: identify a request for a broadcast service for providing a first audio signal acquired through the microphone of the first electronic device and a second audio signal acquired through a microphone of a second electronic device to at least one external electronic device around the first electronic device and the second electronic device, on the basis of synchronization between the first audio signal and the second audio signal; and according to the request, transmit information on a broadcast isochronous group (BIG) event including a first broadcast isochronous stream (BIS) event for the first electronic device and a second BIS event for the second electronic device to the second electronic device by using the communication circuit.

## Description

### [Technical Field]

The disclosure relates to an electronic device and a method for synchronization with another electronic device in a wireless environment.

### [Background Art]

Compared to legacy Bluetooth^{®} (or classic Bluetooth), Bluetooth^{®} low energy (BLE) may provide a communication range between connected devices that is at least a similar or often greater. BLE may be provided on an industrial, scientific, and medical (ISM) radio band.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A first electronic device is provided. The first electronic device may comprise: a microphone. The first electronic device may comprise a communication circuit. The first electronic device may comprise at least one processor comprising processing circuitry The at least one processor may be individually or collectively configured to identify a request of a broadcast service to provide, based on synchronizing a second audio signal obtained via a microphone of a second electronic device with a first audio signal obtained via the microphone of the first electronic device, the first audio signal and the second audio signal to at least one external electronic device around the first electronic device and the second electronic device. The at least one processor may be individually or collectively configured to, according to the request, transmit, using the communication circuit, to the second electronic device, information for a broadcast isochronous group (BIG) event including a first broadcast isochronous stream (BIS) event for the first electronic device and a second BIS event for the second electronic device. The at least one processor may be individually or collectively configured to broadcast, using the communication circuit, at least one first packet through the first BIS event to synchronize the first audio signal with the second audio signal provided by broadcasting from the second electronic device at least one second packet through the second BIS event identified based on the information.

A method is provided. The method may be executed in a first electronic device comprising a microphone and a communication circuit. The method may comprise identifying a request of a broadcast service to provide, based on synchronizing a second audio signal obtained via a microphone of a second electronic device with a first audio signal obtained via the microphone of the first electronic device, the first audio signal and the second audio signal to at least one external electronic device around the first electronic device and the second electronic device. The method may comprise, according to the request, transmitting, using the communication circuit, to the second electronic device, information for a broadcast isochronous group (BIG) event including a first broadcast isochronous stream (BIS) event for the first electronic device and a second BIS event for the second electronic device. The method may comprise broadcasting, using the communication circuit, at least one first packet through the first BIS event to synchronize the first audio signal with the second audio signal provided by broadcasting from the second electronic device at least one second packet through the second BIS event identified based on the information.

A first electronic device is provided. The first electronic device may comprise a microphone. The first electronic device may comprise a communication circuit. The first electronic device may comprise at least one processor comprising processing circuitry . The at least one processor may be individually or collectively configured to receive, from a second electronic device, using the communication circuit, information for a broadcast isochronous group (BIG) event. The at least one processor may be individually or collectively configured to identify, according to the information, a first broadcast isochronous stream (BIS) event for the first electronic device included in the BIG event to synchronize a first audio signal obtained using the microphone of the first electronic device with a second audio signal obtained using a microphone of the second electronic device. The at least one processor may be individually or collectively configured to broadcast, using the communication circuit, at least one first packet through the first BIS event to synchronize the first audio signal with the second audio signal provided by broadcasting at least one second packet from the second electronic device through a second BIS event included in the BIG event.

A method is provided. The method may be executed in a first electronic device comprising a microphone and a communication circuit. The method may comprise receiving, from a second electronic device, using the communication circuit, information for a broadcast isochronous group (BIG) event. The method may comprise identifying, according to the information, a first broadcast isochronous stream (BIS) event for the first electronic device, that is included in the BIG event to synchronize a first audio signal obtained using the microphone of the first electronic device with a second audio signal obtained using a microphone of the second electronic device. The method may comprise broadcasting, using the communication circuit, at least one first packet through the first BIS event to synchronize the first audio signal with the second audio signal provided by broadcasting at least one second packet from the second electronic device through a second BIS event included in the BIG event.

### [Description of the Drawings]

FIG. 1 illustrates an example of broadcasting packets for outputting audio signals synchronized with each other using an assistance device.
FIG. 2 illustrates an example of a wireless environment for a broadcast service.
FIG. 3 is a simplified block diagram of an exemplary first electronic device or second electronic device.
FIG. 4 illustrates exemplary operations for a broadcast service.
FIGS. 5 and 6 illustrate exemplary operations for identifying a request of a broadcast service.
FIG. 7 illustrates exemplary operations for obtaining information for a broadcast service based on reference information from an external electronic device.
FIG. 8 illustrates exemplary operations for negotiating information for a broadcast service.
FIG. 9 illustrates exemplary operations for providing information for a broadcast service to a second electronic device, in a periodic advertisement executed by a first electronic device.
FIG. 10 illustrates exemplary operations for providing information for a broadcast service to a second electronic device by starting broadcasting at least one first packet from a first electronic device.
FIG. 11 illustrates exemplary operations for broadcasting at least one first packet.
FIG. 12 illustrates examples of time resources for at least one first packet and time resources for at least one second packet, which are identified according to information for a broadcast service.
FIG. 13 illustrates an example of a transmit power of at least one first packet and transmit power of at least one second packet, which are changed according to information for a broadcast service.
FIG. 14A illustrates an exemplary method of broadcasting a packet for a second audio signal using a first electronic device according to a change in a state of a second electronic device.
FIG. 14B illustrates an example of a handover from a first electronic device to a second electronic device performed for a broadcast service provided in mono sound.
FIG. 15 is a block diagram of an electronic device in a network environment according to various embodiments.

### [Mode for Invention]

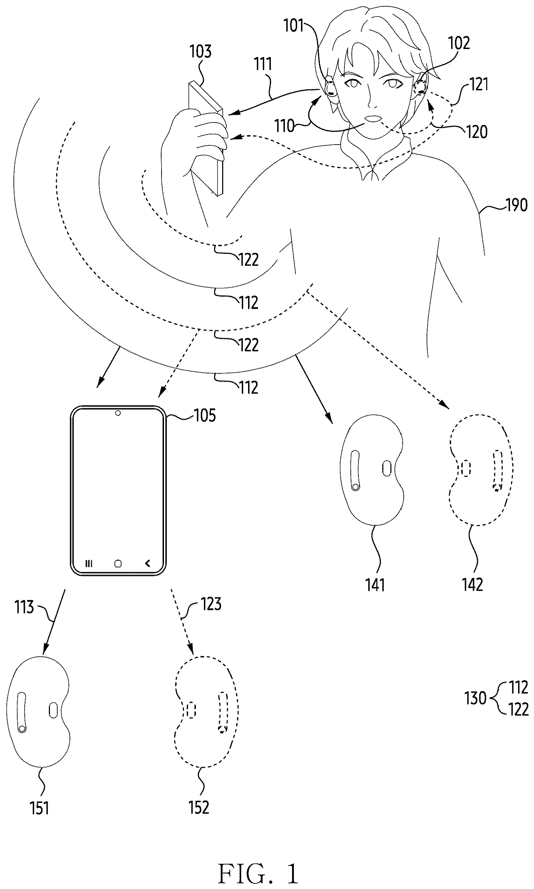

FIG. 1 illustrates an example of broadcasting packets for outputting audio signals synchronized with each other using an assistance device.

Referring to FIG. 1, a first electronic device 101 and a second electronic device 102 may be a pair. As a non-limiting example, the first electronic device 101 may be worn on a user's right ear and the second electronic device 102 may be worn on the user's left ear.

The first electronic device 101 and the second electronic device 102 may be used for a broadcast service that provides a first audio signal provided from the first electronic device 101 and a second audio signal (e.g., an audio signal related to the first audio signal) provided from the second electronic device 102 to external electronic devices (e.g., an external electronic device 141, an external electronic device 142, an external electronic device 151, and an external electronic device 152) around (e.g., within a specified distance of ) the first electronic device 101 and the second electronic device 102. For example, packets for the broadcast service may be broadcasted from an external electronic device 103, which is a broadcast assistance device.

For example, the first electronic device 101 may obtain a first audio signal 110, which is at least a portion of a voice signal of a user 190 using a microphone of the first electronic device 101 for the broadcast service. For example, the second electronic device 102 may obtain a second audio signal 120, which is at least a portion of the voice signal using a microphone of the second electronic device 102 for the broadcast service.

In the example of FIG. 1, since broadcasting the packets for the broadcast service is executed by the external electronic device 103 rather than the first electronic device 101, the first electronic device 101 may transmit at least one first packet 111 for outputting the first audio signal 110 to the external electronic device 103. For example, the at least one first packet 111 may be transmitted to the external electronic device 103 through a communication link between the first electronic device 101 and the external electronic device 103.

In the example of FIG. 1, since broadcasting the packets for the broadcast service is executed by the external electronic device 103 rather than the second electronic device 102, the second electronic device 102 may transmit at least one second packet 121 for outputting the second audio signal 120 to the external electronic device 103. For example, the at least one second packet 121 may be transmitted to the external electronic device 103 through a communication link between the second electronic device 102 and the external electronic device 103.

The external electronic device 103 may receive at least one first packet 111 from the first electronic device 101 for the broadcast service and at least one second packet 121 from the second electronic device 102 for the broadcast service.

The external electronic device 103 may broadcast packets obtained using at least one first packet 111 and at least one second packet 121 for the broadcast service. For example, the external electronic device 103 may broadcast the packets to output the first audio signal 110 from a part of the external electronic devices (e.g., the external electronic device 141, the external electronic device 142, the external electronic device 151, and the external electronic device 152) and to output the second audio signal 120 in relation to the first audio signal 110 from another part of the external electronic devices.

For example, the external electronic devices may include the external electronic device 141 and the external electronic device 142. The external electronic device 141 and the external electronic device 142 may be a pair. For example, since the broadcast service is a service that outputs the first audio signal 110, among the first audio signal 110 and the second audio signal 120, from the external electronic device 141 and outputs the second audio signal 120, among the first audio signal 110 and the second audio signal 120, from the external electronic device 142, the external electronic device 103 may broadcast the packets through a broadcast isochronous group (BIG) event 130 including a first broadcast isochronous stream (BIS) event 112 for the first audio signal 110 and a second BIS event 122 for the second audio signal 120. For example, the external electronic device 141 may output the first audio signal 110 by receiving a part of the packets broadcasted through the first BIS event 112 from the external electronic device 103. As a non-limiting example, the part of the packets received by the external electronic device 141 may be at least one first packet 111. As a non-limiting example, although the part of the packets received by the external electronic device 141 are in common with at least one first packet 111 in terms of being used to output the first audio signal 110, the part of the packets received by the external electronic device 141 may be newly obtained by the external electronic device 103 based on at least one first packet 111.

For example, the external electronic device 142 may output the second audio signal 120 by receiving another part of the packets broadcasted through the second BIS event 122 from the external electronic device 103. As a non-limiting example, the other part of the packets received by the external electronic device 141 may be at least one second packet 121. As a non-limiting example, although the other part of the packets received by the external electronic device 142 are in common with at least one second packet 121 in terms of being used to output the second audio signal 120, the other part of the packets received by the external electronic device 142 may be newly obtained by the external electronic device 103 based on at least one second packet 121.

For example, the external electronic devices may include an external electronic device 105, an external electronic device 151, and an external electronic device 152. The external electronic device 151 and the external electronic device 152 may be a pair. The external electronic device 105 may be a device that assists in outputting audio signals from the external electronic device 151 and the external electronic device 152. For example, the broadcast service may refer, for example, to a service that outputs the first audio signal 110, among the first audio signal 110 and the second audio signal 120, from the external electronic device 151 and outputs the second audio signal 120, among the first audio signal 110 and the second audio signal 120, from the external electronic device 152, the external electronic device 103 may broadcast the packets through the BIG event 130 including the first BIS event 112 and the second BIS event 122. For example, the packets broadcasted through the BIG event 130 from the external electronic device 103 may be received by the external electronic device 105. For example, the external electronic device 105 may receive a part of the packets broadcasted through the first BIS event 112 from the external electronic device 103 and another part of the packets broadcasted through the second BIS event 122 from the external electronic device 103. For example, the external electronic device 105 may transmit at least one first packet 113 obtained based on the part of the packets to the external electronic device 151 and at least one second packet 123 obtained based on the other part of the packets to the external electronic device 152. For example, the external electronic device 151 may output the first audio signal 110 by receiving at least one first packet 113 from the external electronic device 105. For example, the external electronic device 152 may output the second audio signal 120 by receiving at least one second packet 123 from the external electronic device 105.

As in the above example, broadcasting the packets using the external electronic device 103 for the broadcast service may increase latency. For example, since broadcasting the packets using the external electronic device 103 includes transmitting at least one first packet 111, transmitting at least one second packet 121, receiving at least one first packet 111 and at least one second packet 121, and obtaining the packets based on at least one first packet 111 and at least one second packet 121, broadcasting the packets using the external electronic device 103 may increase latency. For example, when the broadcast service is provided in real time for outputting a voice signal as in the example of FIG. 1, the latency may reduce quality of the broadcast service.

As in the above example, broadcasting the packets using the external electronic device 103 for the broadcast service may be executed or performed on a limited bandwidth (and/or within limited time resources). For example, since broadcasting the packets using external electronic device 103 requires dividing resources usable for communication of external electronic device 103 into first resources for transmitting at least one first packet 111, second resources for transmitting at least one second packet 121, and third resources for broadcasting the packets, broadcasting the packets using the external electronic device 103 for the broadcast service may be executed or performed on a limited bandwidth (and/or within limited time resources). Since broadcasting the packets using the external electronic device 103 on a limited bandwidth (and/or within limited time resources) is executed may refer, for example, to reducing a probability of receiving the packets, broadcasting the packets using the external electronic device 103 for the broadcast service may reduce the quality of the broadcast service.

The broadcast service illustrated below may be provided through broadcasting of packets without a broadcast assistance device such as the external electronic device 103 for quality. The broadcast service to be illustrated below may be provided through broadcasting of packets using electronic devices that provide audio signals, instead of the broadcasting of packets using the broadcast assistance devices for quality.

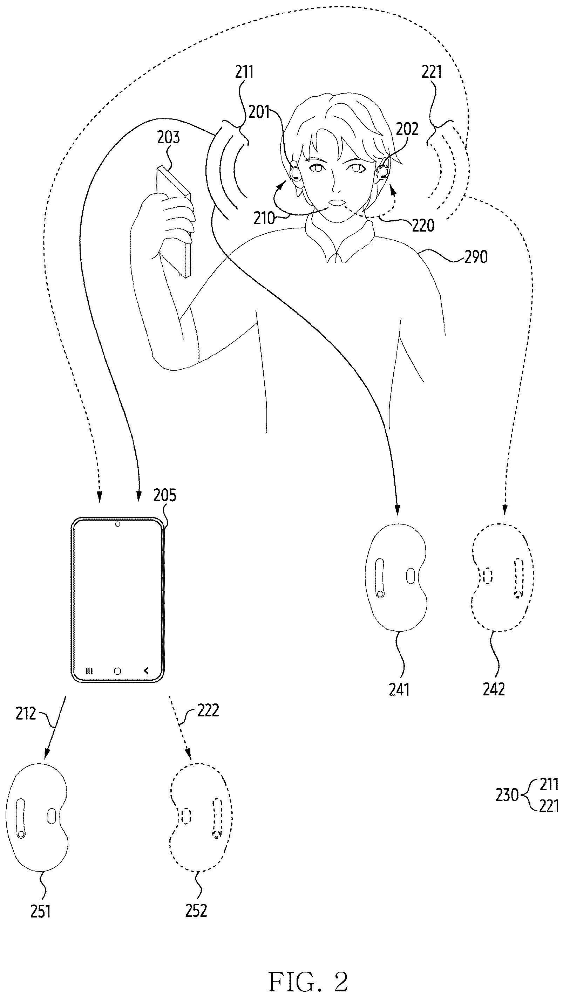

FIG. 2 illustrates an example of a wireless environment for a broadcast service.

Referring to FIG. 2, a first electronic device 201 and a second electronic device 202 may be electronic devices capable of providing an audio signal, respectively. As a non-limiting example, the first electronic device 201 and the second electronic device 202 may be a pair. As a non-limiting example, each of the first electronic device 201 and the second electronic device 202 may be a wearable device. For example, the first electronic device 201 may be worn on a user's right ear and the second electronic device 202 may be worn on the user's left ear. For example, the first electronic device 201 and the second electronic device 202 may include true wireless stereo (TWS) devices.

The first electronic device 201 and the second electronic device 202 may be used for a broadcast service that provides a first audio signal provided from the first electronic device 201 and a second audio signal (e.g., an audio signal to be output in relation to the first audio signal) provided from the second electronic device 202 to external electronic devices (e.g., an external electronic device 241, an external electronic device 242, an external electronic device 251, and an external electronic device 252) around the first electronic device 201 and the second electronic device 202. For example, the broadcast service may be used for docent and/or for teacher (instructor, or lecturer).

For example, the first electronic device 201 may obtain a first audio signal 210 that is at least a portion of a voice signal of a user 290 using a microphone of the first electronic device 201 for the broadcast service. For example, the second electronic device 202 may obtain a second audio signal 220 that is at least a portion of the voice signal using a microphone of the second electronic device 202 for the broadcast service.

For example, the first electronic device 201 may broadcast at least one first packet for outputting the first audio signal 210 by itself (or for itself), for the broadcast service. For example, the first electronic device 201 may broadcast the at least one first packet without usage (or assistance) of the external electronic device 203.

For example, the second electronic device 202 may broadcast at least one second packet for outputting the second audio signal 220 by itself (or for itself) for the broadcast service. For example, the second electronic device 202 may broadcast the at least one second packet without usage (or assistance) of the external electronic device 203.

For example, since the first audio signal 210 and the second audio signal 220 should be output in relation to each other for the broadcast service, broadcasting of the at least one first packet may be synchronized, associated, or linked with broadcasting of the at least one second packet, for the broadcast service.

For example, a BIG event 230 may be used for synchronization between broadcasting the at least one first packet and broadcasting the at least one second packet. For example, the BIG event 230 may include a first BIS event 211 for the first audio signal 210 and a second BIS event 221 for the second audio signal 220. For example, the first electronic device 201 may broadcast the at least one first packet through the first BIS event 211, and the second electronic device 202 may broadcast the at least one second packet through the second BIS event 221.

For example, the external electronic devices may include an external electronic device 241 and an external electronic device 242. The external electronic device 241 and the external electronic device 242 may be a pair. For example, the external electronic device 241 may output the first audio signal 210 by receiving the at least one first packet broadcasted through the first BIS event 211 from the first electronic device 201. For example, the external electronic device 242 may output the second audio signal 220 by receiving the at least one second packet broadcasted through the second BIS event 221 from the second external electronic device 202.

For example, the external electronic devices may include an external electronic device 205, an external electronic device 251, and an external electronic device 252. The external electronic device 251 and the external electronic device 252 may be a pair. The external electronic device 205 may be a device that assists in outputting audio signals from the external electronic device 251 and the external electronic device 252. For example, the external electronic device 205 may receive the at least one first packet and the at least one second packet, which are broadcasted through the BIG event 230. For example, the external electronic device 205 may obtain at least one first packet 212 based on the at least one first packet received through the first BIS event 211 and transmit the at least one first packet 212 to the external electronic device 251. The external electronic device 251 may output the first audio signal 210 based on the at least one first packet 212. For example, the external electronic device 205 may obtain at least one second packet 222 based on the at least one second packet received through the second BIS event 221 and transmit the at least one second packet 222 to the external electronic device 252. The external electronic device 252 may output the second audio signal 220 based on the at least one second packet 222.

For example, since broadcasting the at least one first packet is executed by the first electronic device 201 and broadcasting the at least one second packet is executed by the second electronic device 202, synchronization between the first electronic device 201 and the second electronic device 202 may be used or required for the broadcast service. For example, the synchronization may be performed or achieved through the first electronic device 201 transmitting information for the broadcast service to the second electronic device 202.

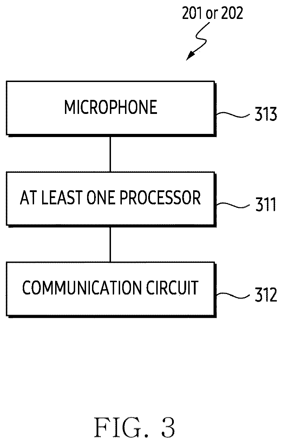

Components of the first electronic device 201 (or the second electronic device 202) used for the broadcast service illustrated in the description of FIG. 2 may be illustrated and described in greater detail below with reference to FIG. 3.

FIG. 3 is a simplified block diagram of an exemplary first electronic device or second electronic device.

Referring to FIG. 3, a first electronic device 201 or a second electronic device 202 may include at least one processor (e.g., including processing circuitry) 311, a communication circuit 312, and a microphone 313. Above components are merely examples. For example, the first electronic device 201 or the second electronic device 202 may include another component (e.g., rechargeable battery, audio processing circuit, and/or input/output interface). For example, some components (e.g., the microphones 313) may be omitted from the first electronic device 201 or the second electronic device 202.

The at least one processor 311 may include various processing circuitry and be used to obtain an audio signal through the microphone 313. The at least one processor 311 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The audio signal may be obtained using the microphone 313. The audio signal may be obtained from another electronic device (e.g., an external electronic device 203) without using the microphone 313. The at least one processor 311 may be used to obtain or generate a packet for the audio signal (or a packet for outputting the audio signal). The at least one processor 311 may cause or control the communication circuit 312 to transmit or broadcast the packet. The at least one processor 311 may cause or control the communication circuit 312 to receive information related to the broadcast service from another electronic device.

The communication circuit 312 may be used for Bluetooth low energy (BLE). The communication circuit 312 may be used to broadcast or transmit packets, or receive information. The communication circuit 312 may operate according to control of the at least one processor 311.

The microphone 313 may be used to obtain the audio signal. For example, the microphone 313 may be used for receiving the audio signal.

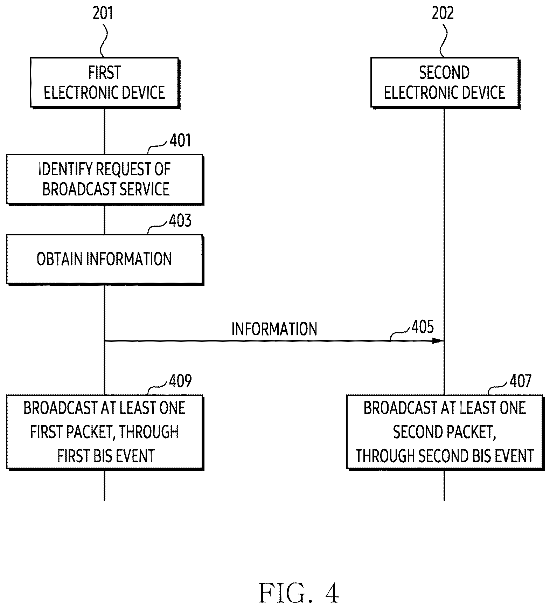

The first electronic device 201 and the second electronic device 202 may execute operations illustrated and described in greater detail below with reference to FIGS. 4 to 14B using at least a part of the components illustrated in the description of FIG. 3.

FIG. 4 illustrates exemplary operations for a broadcast service.

Referring to FIG. 4, in operation 401, a first electronic device 201 may identify a request of the broadcast service illustrated in the description of FIG. 2. For example, the broadcast service may include a broadcast service that provides a first audio signal and a second audio signal to at least one external electronic device around the first electronic device 201 and a second electronic device 202, based on synchronizing the first audio signal (e.g., the first audio signal 210) obtained through a microphone of the first electronic device 201 and the second audio signal (e.g., the second audio signal 220) obtained through a microphone of the second electronic device 202.

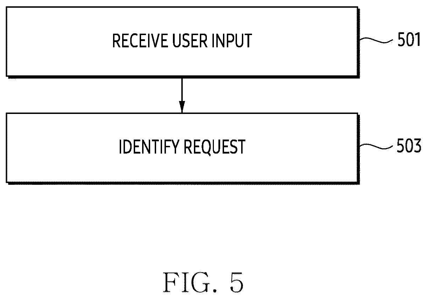

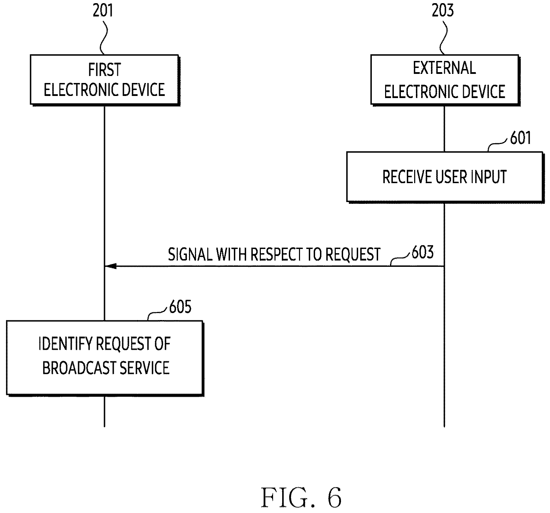

Identifying the request for the broadcast service may be implemented in various ways. Identifying the request for the broadcast service is illustrated and described in greater detail below with reference to FIGS. 5 and 6.

FIGS. 5 and 6 illustrate exemplary operations for identifying a request of a broadcast service.

Referring to FIG. 5, in operation 501, a first electronic device 201 may receive a user input. The user input may indicate a user input caused with respect to the first electronic device 201. The user input may indicate starting to provide the broadcast service.

The user input received in operation 501 may be variously defined.

For example, the user input received in operation 501 may include a user input with respect to a physical button exposed through a portion of a housing of the first electronic device 201 forming the exterior of the first electronic device 201 (or a touch area of the housing). As a non-limiting example, the first electronic device 201 may identify the user input received in operation 501 according to identifying that the number of times the physical button is pressed (or the number of times the touch area is tapped) reaches a reference number. As a non-limiting example, the first electronic device 201 may identify the user input received in operation 501 according to identifying a touch input on the touch area having a reference pattern.

For example, the user input received in operation 501 may include a movement of the first electronic device 201, such as a change of a posture (or orientation) of the first electronic device 201. As a non-limiting example, the first electronic device 201 may identify the user input received in operation 501 according to identifying that data indicating a change of movement of the first electronic device 201 corresponds to reference data.

For example, the user input received in operation 501 may include a user input with respect to a cradle in which the first electronic device 201 is stored. As a non-limiting example, in response to a user input with respect to a physical button exposed through a portion of a housing of the cradle forming the exterior of the cradle, the cradle may provide the first electronic device 201 with a signal indicating that the user input with respect to the physical button is received. As a non-limiting example, in response to a user input received through a touch panel of the cradle, the cradle may provide the first electronic device 201 with a signal indicating that the user input is received. As a non-limiting example, in response to data measured through a sensor of the cradle, the cradle may provide the first electronic device 201 with a signal indicating that the user input is received. As a non-limiting example, the cradle may provide the first electronic device 201 with a signal indicating that the user input is received, based on a radiation pattern obtained through a communication circuit of the cradle (e.g., checking a grip state according to a change in the radiation pattern).

As a non-limiting example, the signal may be transmitted to the first electronic device 201 through a communication link for BLE or may be transmitted to the first electronic device 201 through a path of a signal for charging a rechargeable battery of the first electronic device 201.

In operation 503, the first electronic device 201 may identify the request of the broadcast service by identifying the user input. For example, the first electronic device 201 may recognize or identify a user intention to start the broadcast service through the user input.

Referring to FIG. 6, in operation 601, an external electronic device 203 may receive a user input. For example, the external electronic device 203 may be an electronic device related to the first external electronic device 201 (and/or the second electronic device 202). As a non-limiting example, the external electronic device 203 may include an audio source device for providing audio data to the first electronic device 201 and the second electronic device 202 and/or an audio sync device for obtaining audio data from the first electronic device 201 and the second electronic device 202. As a non-limiting example, unlike the first electronic device 201, the external electronic device 203 may include a display.

A user input received in operation 601 may be variously defined.

For example, the user input received in operation 601 may include an input (or touch input) with respect to an object (e.g., an executable object and/or icon) displayed on the display of the external electronic device 203. As a non-limiting example, the object may include a visual element having a text or shape that guides or informs the broadcast service.

For example, the user input received in operation 601 may include a user input with respect to a physical button exposed through a portion of a housing of the external electronic device 203 forming the exterior of the external electronic device 203. As a non-limiting example, the external electronic device 203 may identify the user input received in operation 601 according to identifying that the number of times the physical button is pressed reaches a reference number.

For example, the user input received in operation 601 may include a voice command obtained through a microphone of the external electronic device 203. As a non-limiting example, the voice command may be obtained based on natural language processing of the external electronic device 203.

In operation 603, the external electronic device 203 may transmit a signal with respect to a request of the broadcast service to the first electronic device 201, in response to the user input received in operation 601. For example, the external electronic device 203 may transmit the signal to the first electronic device 201 by advertising the signal using a communication circuit of the external electronic device 203 for BLE. For example, the external electronic device 203 may transmit the signal to the first electronic device 201, through a communication link between the first electronic device 201 and the external electronic device 203, using the communication circuit. For example, the signal may be broadcasted or unicasted.

Although operation 603 of FIG. 6 illustrates an example in which the signal is transmitted to the first electronic device 201, the signal may also be transmitted to the second electronic device 202.

In operation 605, the first electronic device 201 may identify the request of the broadcast service by receiving the signal from the external electronic device 203.

Referring back to FIG. 4, in operation 403, in response to the request, the first electronic device 201 may obtain, define, schedule, identify, or process information for the broadcast service illustrated and described with reference to FIG. 2.

Since the broadcast service illustrated in the description of FIG. 2 is provided by synchronizing the first audio signal (e.g., the first audio signal 210) provided from the first electronic device 201 and the second audio signal (e.g., the second audio signal 220) provided from the second electronic device 202, synchronizing operations of the first electronic device 201 and operations of the second electronic device 202 may be performed for the broadcast service illustrated in the description of FIG. 2.

For example, synchronizing the operations of the first electronic device 201 with the operations of the second electronic device 202 may include synchronizing obtaining the first audio signal through the microphone of the first electronic device 201 with obtaining the second audio through the microphone of the second electronic device 202. For example, synchronizing obtaining the first audio signal with obtaining the second audio signal may include synchronizing a time period (or timing) for generating or obtaining at least one first packet for the first audio signal with a time period (or timing) for generating or obtaining at least one second packet for the second audio signal. For example, synchronizing obtaining the first audio signal with obtaining the second audio signal may include differently setting an audio channel (e.g., a channel for outputting an audio signal for the right ear) of the first audio signal from an audio channel (e.g., a channel for outputting an audio signal for the left ear) of the second audio signal. For example, synchronizing obtaining the first audio signal with obtaining the second audio signal may include synchronizing a time period (or timing) for encoding the first audio signal obtained using the microphone of the first electronic device 201 with a time period (or timing) for encoding the second audio signal obtained using the microphone of the second electronic device 202.

For example, synchronizing the operations of the first electronic device 201 with the operations of the second electronic device 202 may include synchronizing broadcasting the at least one first packet with broadcasting the at least one second packet. For example, synchronizing broadcasting the at least one first packet with broadcasting the at least one second packet may be executed for outputting the first audio signal and the second audio signal in association with each other. As a non-limiting example, synchronizing broadcasting the at least one first packet with broadcasting the at least one second packet may be executed for outputting stereophonic sound. For example, synchronizing broadcasting the at least one first packet with broadcasting the at least one second packet may include synchronizing a time period (or timing) for broadcasting the at least one first packet with a time period (or timing) for broadcasting the at least one second packet. For example, synchronizing the operations of the first electronic device 201 with the operations of the second electronic device 202 may include synchronizing data (e.g., program information and/or broadcast identifier (ID)) included in the at least one first packet with data included in the at least one second packet.

For example, synchronizing the operations of the first electronic device 201 with the operations of the second electronic device 202 may include synchronizing a transmit power of the at least one first packet with a transmit power of the at least one second packet. For example, synchronizing the operations of the first electronic device 201 with the operations of the second electronic device 202 may include synchronizing a channel on which the at least one first packet is broadcasted with a channel on which the at least one second packet is broadcasted.

For example, the first electronic device 201 may obtain the information to synchronize the operations of the first electronic device 201 with the operations of the second electronic device 202. The information obtained (or identified) in operation 403 may include various information.

For example, the information obtained in operation 403 may include information on a BIG event (e.g., the BIG event 230) including a first BIS event (e.g., the first BIS event 211) for the first electronic device 201 and a second BIS event (e.g., the second BIS event 221) for the second electronic device 202. For example, information on the BIG event may include data indicating a type of service provided through the BIG event, data indicating whether encryption is applied for the BIG event, data indicating a key (e.g., encryption key) for the encryption, data indicating a type of physical link to be used for the BIG event, data indicating a type and number of audio channel for the BIG event, data indicating an access address to be used for the audio channel, data indicating an access address of a control sub-event within the BIG event, data indicating an initial (or starting) channel map for the BIG event, data indicating a method of updating a channel map for the BIG event, data indicating a framing mode for the BIG event, and/or data indicating parameters for the BIG event (e.g., including transmission information of broadcast through the BIG event). For example, the information on the BIG event may be usable for identifying an anchor point of the second BIS event. For example, the information on the BIG event may be usable for identifying an access address for the second BIS event.

For example, the information obtained in operation 403 may include information on a periodic advertisement executed to indicate the BIG event. For example, the information on the periodic advertisement may include data indicating a timing of the periodic advertisement, data indicating a device (e.g., the first electronic device 201 and/or the second electronic device 202) executing the periodic advertisement, and/or data indicating an interval between the periodic advertisement.

For example, the information obtained in operation 403 may include information on a type of audio channel allocated to the second electronic device 202 for the broadcast service. For example, the information obtained in operation 403 may include information on an identifier used for broadcasting the at least one second packet. For example, the information obtained in operation 403 may include program information for the broadcast service. For example, the information obtained in operation 403 may include information for synchronizing a time period for obtaining the first audio signal using the microphone of the first electronic device 201 with a time period for obtaining the second audio signal using the microphone of the second electronic device 202. For example, the information obtained in operation 403 may include information for synchronizing a time period for encoding the first audio signal obtained using the microphone of the first electronic device 201 with a time period for encoding the second audio signal obtained using the microphone of the second electronic device 202. For example, the information obtained in operation 403 may include information for identifying a map of a channel used to broadcast the at least one first packet and the at least one second packet. For example, the information obtained in operation 403 may include information for identifying a transmit power of the at least one second packet.

A method of obtaining the information in operation 403 may be variously executed.

For example, the information may be obtained or identified by the first electronic device 201 without assistance from the second electronic device 202 and the external electronic device 203.

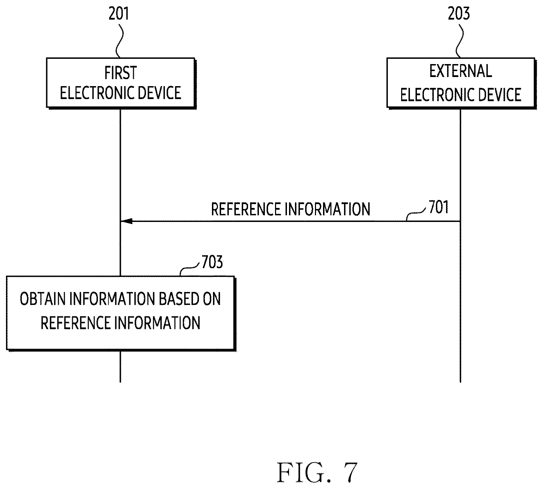

For example, the information may be obtained or identified based on assistance of the external electronic device 203. The assistance of the external electronic device 203 is illustrated described in greater detail below with reference to FIG. 7.

FIG. 7 illustrates exemplary operations for obtaining information for a broadcast service based on reference information from an external electronic device.

Referring to FIG. 7, in operation 701, an external electronic device 203 may transmit reference information to a first electronic device 201. The reference information may be transmitted from the external electronic device 203 to assist in obtaining the information.

The reference information may be transmitted through various methods. The reference information may be advertised by the external electronic device 203. The reference information may be transmitted through a communication link between the external electronic device 203 and the first electronic device 201.

As a non-limiting example, the reference information may be included in a signal with respect to the request, transmitted from the external electronic device 203 to the first electronic device 201 in operation 603. For example, operation 701 may be executed through operation 603. As a non-limiting example, transmitting the reference information may be executed after transmitting the signal for the request in operation 603.

The reference information may include various data for the broadcast service. The reference information may include at least portion of the information obtained in operation 403. The reference information may indicate the number of BIS events included in the BIG event, the identifier, and/or the program information.

In operation 703, the first electronic device 201 may obtain the information based on the reference information received from the external electronic device 203. For example, the first electronic device 201 may obtain the entire reference information as the information. For example, the first electronic device 201 may obtain a portion of the reference information as the information.

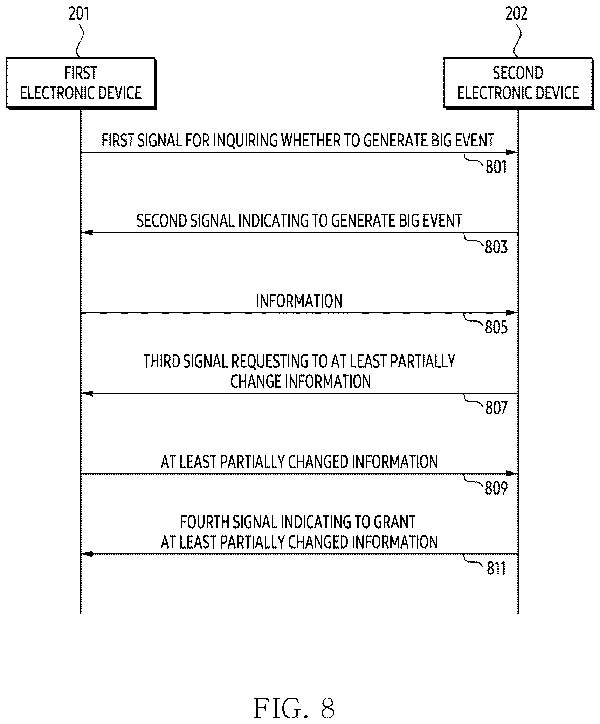

Referring back to FIG. 4, the information may be obtained or identified through negotiation between the first electronic device 201 and the second electronic device 202. The negotiation may be illustrated and described in greater detail below with reference to FIG. 8.

FIG. 8 illustrates exemplary operations for negotiating information for a broadcast service.

Referring to FIG. 8, in operation 801, a first electronic device 201 may transmit a first signal for inquiring whether to generate a BIG event to a second electronic device 202, in response to the request identified in operation 401. The first signal may be unicasted to the second electronic device 202 or advertised. Since the second electronic device 202 may be in a state different from a state of the first electronic device 201, the first electronic device 201 may transmit the first signal to the second electronic device 202. The second electronic device 202 may receive the first signal.

In operation 803, the second electronic device 202 may transmit a second signal indicating to generate the BIG event to the first electronic device 201. The first signal may be unicasted to the first electronic device 201, or advertised. The second signal may indicate granting to generate the BIG event. The first electronic device 201 may receive the second signal from the second electronic device 202.

In operation 805, the first electronic device 201 may transmit information for the broadcast service to the second electronic device 202 in response to the second signal. For example, the information in operation 805 may be obtained without participation (or assistance) of the second electronic device 202. For example, when the second signal includes information on a state of the second electronic device 202, the information may be obtained based on the second signal. The second electronic device 202 may receive the information from the first electronic device 201. The second electronic device 202 may identify whether the information is usable in the second electronic device 202 for the broadcast service. For example, the identification may be executed based on a state of a communication link between the first electronic device 201 and the second electronic device 202, whether the second electronic device 202 is worn, a state of a rechargeable battery of the second electronic device 202, whether an audio service is being provided by the second electronic device 202, and/or whether a connection with another electronic device distinct from the first electronic device 201 is established.

In operation 807, the second electronic device 202 may transmit, to the first electronic device 201, a third signal requesting to at least partially change the information, in response to identifying that the information is not usable in the second electronic device 202 for the broadcast service. For example, the third signal may be advertised, or unicasted to the first electronic device 201. The first electronic device 201 may receive the third signal from the second electronic device 202. The first electronic device 201 may at least partially change the information based on the third signal.

In operation 809, the first electronic device 201 may transmit the at least partially changed information to the second electronic device 202. The at least partially changed information may be advertised, or unicasted to the second electronic device 202. As a non-limiting example, the at least partially changed information may be information to be transmitted in operation 405 of FIG. 4. For example, operation 809 may correspond to operation 405 of FIG. 4.

The second electronic device 202 may receive the at least partially changed information. The second electronic device 202 may identify or determine whether to grant at least partially changed information.

In operation 811, the second electronic device 202 may transmit a fourth signal indicating to grant the information (e.g., the at least partially changed information) received in operation 809, to the first electronic device 201, in response to determining to grant the at least partially changed information (e.g., information obtained based on the third signal). For example, the fourth signal may be advertised, or unicasted to the first electronic device 201. The first electronic device 201 may receive the fourth signal. For example, the negotiation may be completed or terminated according to the reception of the fourth signal.

As a non-limiting example, operations 807 and 809 of FIG. 8 may be repeatedly executed. For example, when the second electronic device 202 does not grant the at least partially changed information received from the first electronic device 201, the second electronic device 202 may transmit the third signal to the first electronic device 201 again as in operation 807, and the first electronic device 201 may transmit the at least partially changed information to the second electronic device 202 again based on the third signal received again from the second electronic device 202.

As a non-limiting example, at least a part of operations 801, 803, 805, 807, 809, and 811 of FIG. 8 may be executed through (or using) a link layer.

Referring back to FIG. 4, in operation 405, the first electronic device 201 may transmit, provide, or indicate the information (e.g., information obtained through operation 703 of FIG. 7, information obtained based on the third signal received in operation 807 of FIG. 8 or the fourth signal received in operation 911 of FIG. 8) obtained or identified in operation 403 to the second electronic device 202.

Informing the information to the second electronic device 202 may be implemented in various ways.

For example, the first electronic device 201 may transmit the information through a communication link between the first electronic device 201 and the second electronic device 202. For example, the information may be transmitted to the second electronic device 202 through the communication link for BLE. When the information is transmitted while the first electronic device 201 and the second electronic device 202 are stored in the cradle, the information may be transmitted to the second electronic device 202 through the cradle. The information may also be transmitted using PLC communication.

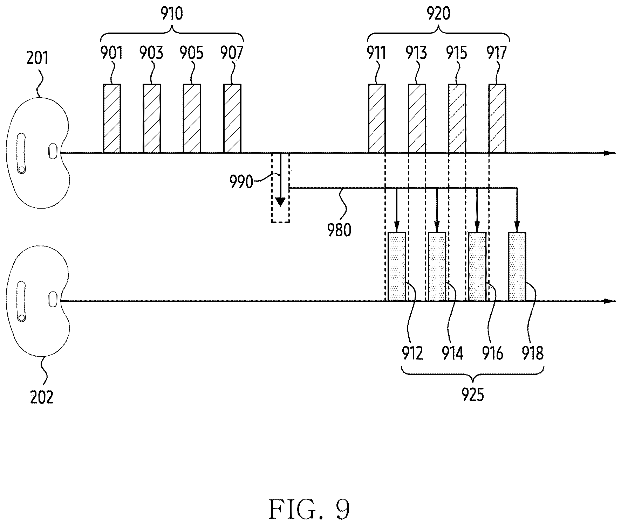

For example, the first electronic device 201 may transmit the information to the second electronic device 202 by advertising the information. The advertisement of the information is illustrated and described in greater detail below with reference to FIG. 9.

FIG. 9 illustrates exemplary operations for providing information for a broadcast service to a second electronic device, in a periodic advertisement executed by a first electronic device.

Referring to FIG. 9, the first electronic device 201 may broadcast packets 910 for the first audio signal in response to the request before providing the information to the second electronic device 202. For example, the packets 910 may include a packet 901, a packet 903, a packet 905, and a packet 907 for outputting the first audio signal. At least a part of the packet 903, the packet 905, and the packet 907 may also be a packet for retransmission. For example, the packets 910 may be broadcasted through the first BIS event (or sub-events in the first BIS event). For example, the packets 910 may be broadcasted before information on the BIG event is identified by the second electronic device 202.

The first electronic device 201 may perform a periodic advertisement 990 after broadcasting the packets 910. For example, the periodic advertisement 990 may be executed to indicate the information for the broadcast service. As a non-limiting example, the periodic advertisement 990 may be executed to transmit the information on the BIG event to the second electronic device 202. As a non-limiting example, the periodic advertisement 990 may be executed to indicate (or inform, or point) the BIG event to external electronic devices around the first electronic device 201 and the second electronic device 202. As a non-limiting example, the periodic advertisement 990 may be executed to inform a next BIG event before the next BIG event.

The first electronic device 201 may broadcast packets 920 through a first BIS event in the next BIG event. For example, the packets 920 may include packets 911, packets 913, packets 915, and packets 917 for outputting the first audio signal. For example, at least a part of the packets 911, 913, 915, and 917 may also be a packet for retransmission.

The second electronic device 202 may identify the periodic advertisement 990 using a communication circuit of the second electronic device 202. As a non-limiting example, as indicated by arrow 980, the second electronic device 202 may identify a second BIS event included in the next BIG event, based on the periodic advertisement 990. For example, the second electronic device 202 may broadcast packets 925 through the second BIS event in the next BIG event. For example, the packets 925 may include a packet 912, a packet 914, a packet 916, and a packet 918 for outputting the second audio signal. At least a part of the packet 914, the packet 916, and the packet 918 may also be a packet for retransmission. For example, since the second electronic device 202 broadcasts the packets 925 based on the information, as indicated by arrow 980, broadcasting the packets 925 may be synchronized with broadcasting the packets 920.

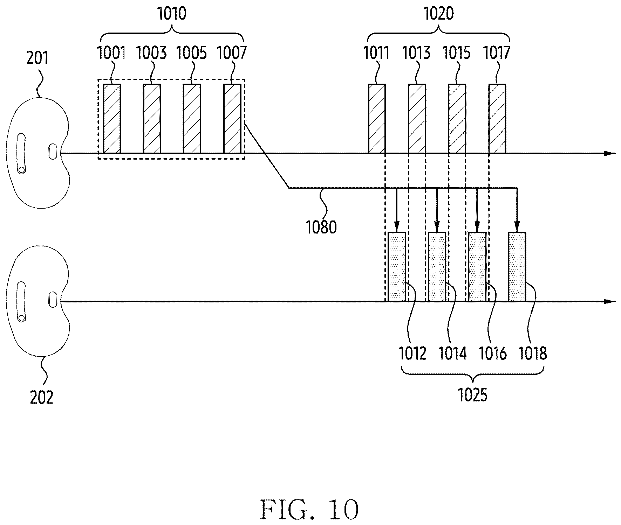

Referring back to FIG. 4, the information may be indicated to the second electronic device 202 through broadcast of the first electronic device 201 according to the request. Indication of the information through broadcast of the first electronic device 201 is illustrated and described in greater detail below with reference to FIG. 10.

FIG. 10 illustrates exemplary operations for providing information for a broadcast service to a second electronic device by starting broadcasting at least one first packet from a first electronic device.

Referring to FIG. 10, the first electronic device 201 may broadcast packets 1010 for the first audio signal in response to the request. For example, the packets 1010 may include a packet 1001, a packet 1003, a packet 1005, and a packet 1007 for outputting the first audio signal. At least a part of the packet 1003, the packet 1005, and the packet 1007 may also be a packet for retransmission. For example, the packets 1010 may be broadcast through the first BIS event (or sub-events in the first BIS event). For example, the packets 1010 may be broadcasted before the information on the BIG event is identified by the second electronic device 202.

The first electronic device 201 may broadcast packets 1020 through a first BIS event in a next BIG event. For example, the packets 1020 may include a packet 1011, a packet 1013, a packet 1015, and a packet 1017 for outputting the first audio signal. For example, at least a part of the packet 1011, the packet 1013, the packet 1015, and the packet 1017 may also be a packet for retransmission.

Since the second electronic device 202 is a paired electronic device with the first electronic device 201, the second electronic device 202 may identify the information for the broadcast service, indicated by broadcasting the packets 1010. As a non-limiting example, as indicated by arrow 1080, the second electronic device 202 may identify a second BIS event in the next BIG event based on the identification of broadcasting the packets 1010. For example, identifying the second BIS event may be executed based on information on the BIG event received from the first electronic device 201 to the second electronic device 202. For example, the second electronic device 202 may broadcast packets 1025 through the second BIS event in the next BIG event. For example, the packets 1025 may include packets 1012, packets 1014, packets 1016, and packets 1018 for outputting the second audio signal. At least a part of the packet 1014, the packet 1016, and the packet 1018 may also be a packet for retransmission. For example, since the second electronic device 202 broadcasts the packets 1025 based on the information, as indicated by arrow 1080, broadcasting the packets 1025 may be synchronized with broadcasting the packets 1020.

Referring back to FIG. 4, in operation 407, the second electronic device 202 may broadcast the at least one second packet for the second audio signal, through the second BIS event identified based on the information. For example, since the second BIS event is a BIS event included in the BIG event identified by the first electronic device 201, broadcasting the at least one second packet in operation 407 may be synchronized with broadcasting the at least one first packet in operation 409.

In operation 409, the first electronic device 201 may broadcast the at least one first packet through the first BIS event, in order to synchronize the first audio signal with the second audio signal provided by broadcasting the at least one second packet from the second electronic device 202 through the second BIS event identified by the second electronic device 202 based on the information. For example, broadcasting the at least one first packet in operation 409 may be synchronized with broadcasting the at least one second packet in operation 407.

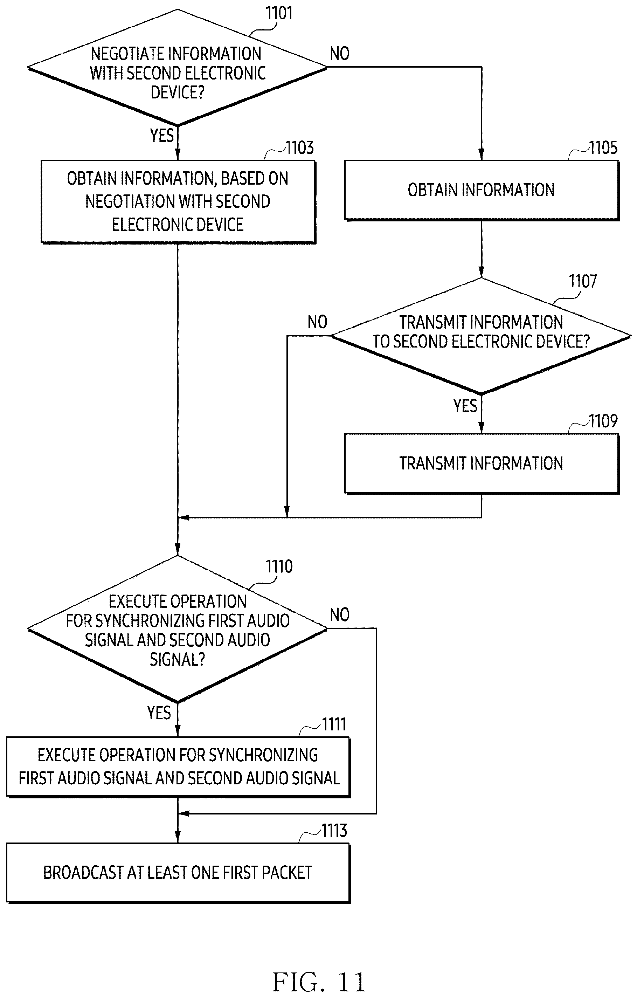

The operations of the first electronic device 201 illustrated above may be executed as illustrated and described in greater detail below with reference to FIG. 11.

FIG. 11 illustrates exemplary operations for broadcasting at least one first packet.

Referring to FIG. 11, in operation 1101, the first electronic device 201 may determine or identify whether to negotiate the information for the broadcast service with the second electronic device 202, in response to the request of the broadcast service illustrated in the description of FIG. 2 as in operation 401 of FIG. 4. For example, the determination in operation 1101 may be executed, based on a setting (and/or user setting) of the first electronic device 201 related to the broadcast service, a state of the first electronic device 201, a state of the second electronic device 202 recognized by the first electronic device 201, a state of a communication link between the first electronic device 201 and the second electronic device 202, whether the first electronic device 201 is worn, a state of a rechargeable battery of the first electronic device 201, whether an audio service is being provided by the first electronic device 201, and/or whether a connection (or communication link) with another electronic device distinct from the second electronic device 202 is established.

For example, the first electronic device 201 may execute operation 1103 when determining that negotiation with the second electronic device 202 is necessary to obtain the information for the broadcast service, and may execute operation 1105 when determining that negotiation with the second electronic device 202 is not necessary.

In operation 1103, the first electronic device 201 may obtain the information for the broadcast service based on negotiation with the second electronic device 202, based on determining to negotiate with the second electronic device 202 to obtain the information for the broadcast service. For example, operation 1103 may be executed through operations 801 to 811 of FIG. 8.

In operation 1105, the first electronic device 201 may obtain the information for the broadcast service without assistance (or participation) of the second electronic device 202, based on determining to not negotiate with the second electronic device 202 to obtain the information for the broadcast service (or determining to bypass negotiating with the second electronic device 202 to obtain the information for the broadcast service). For example, the information may also be obtained based on the reference information (e.g., the reference information in operation 701 of FIG. 7) from the external electronic device 203, or may also be obtained without assistance (or participation) of the external electronic device 203.

In operation 1107, the first electronic device 201 may determine or identify whether to transmit the information obtained in operation 1105 to the second electronic device 202. For example, the determination in operation 1107 may be executed based on a setting (and/or user setting) of the first electronic device 201 related to the broadcast service, a state of the first electronic device 201, a state of the second electronic device 202 recognized by the first electronic device 201, a state of a communication link between the first electronic device 201 and the second electronic device 202, whether the first electronic device 201 is worn, a state of a rechargeable battery of the first electronic device 201, whether an audio service is being provided by the first electronic device 201, and/or whether a connection (or communication link) with another electronic device distinct from the second electronic device 202 is established.

For example, the first electronic device 201 may execute operation 1109 when determining to transmit the information to the second electronic device 202, and may execute operation 1110 by bypassing operation 1109 when determining not to transmit the information to the second electronic device 202.

In operation 1109, the first electronic device 201 may transmit the information to the second electronic device 202. The first electronic device 201 may transmit the information to the second electronic device 202, as in an example through the description of FIG. 4 or in an example through the description of FIG. 9.

In operation 1110, the first electronic device 201 may determine or identify whether to execute an operation for synchronizing the first audio signal and the second audio signal. For example, the determination in operation 1110 may be executed based on whether a setting for how to perform synchronization of the first audio signal with the second audio signal is defined within the first electronic device 201 and the second electronic device 202.

For example, when determining to execute an operation for synchronizing the first audio signal and the second audio signal device 201, the first electronic device 201 may execute operation 1111, and otherwise execute operation 1113 by bypassing operation 1111.

In operation 1111, the first electronic device 201 may execute an operation for synchronizing the first audio signal and the second audio signal. For example, the first electronic device 201 may transmit, to the second electronic device 202, information for synchronizing a time period for obtaining the first audio signal using the microphone of the first electronic device 201 to generate (or obtain) at least one first packet and a time period for obtaining the second audio signal using the microphone of the second electronic device 202 to generate (or obtain) at least one second packet. For example, the first electronic device 201 may transmit, to the second electronic device 202, information for synchronizing a time period for encoding the first audio signal obtained using the microphone of the first electronic device 201 and a time period for encoding the second audio signal obtained using the microphone of the second electronic device 202.

In operation 1113, the first electronic device 201 may broadcast the at least one first packet. For example, broadcasting the at least one first packet may be synchronized with broadcasting the at least one second packet by the second electronic device 202.

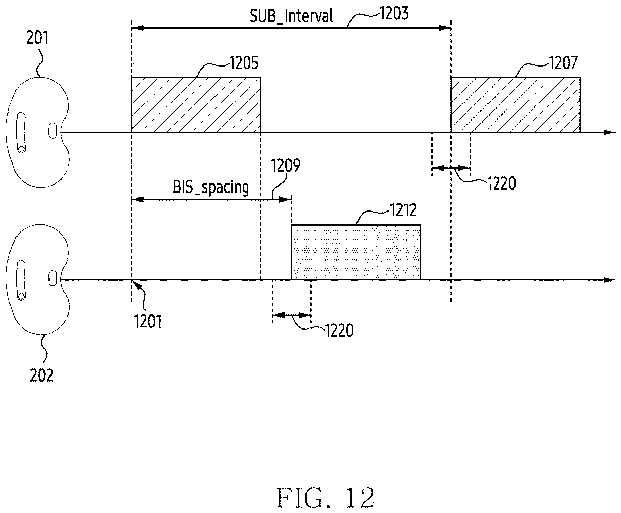

For example, synchronization between broadcast of the first electronic device 201 and broadcast of the second electronic device 202, such as synchronization between operations 407 and 409, synchronization between broadcasting the packets 920 and broadcasting the packets 925, and synchronization between broadcasting the packets 1020 and broadcasting the packets 1025 in FIG. 10, may be executed or achieved by indicating a transmission timing of the second electronic device 202 using the information on the BIG event. The transmission timing of the second electronic device 202 is illustrated and described in greater detail below with reference to FIG. 12.

FIG. 12 illustrates examples of time resources for at least one first packet and time resources for at least one second packet, which are identified according to information for a broadcast service.

Referring to FIG. 12, the first BIS event and the second BIS event may be included in the BIG event according to an interleaved arrangement. For example, the first electronic device 201 may obtain the information on the BIG event so as to have a sub-event 1212 in the second BIS event in the BIG event between a sub-event 1205 in the first BIS event in the BIG event and a sub-event 1207 in the first BIS event in the BIG event having a starting point after a sub_interval 1203 from a starting point 1201 (or anchor point 1201 of the first BIS event) (or anchor point 1201 of the BIG event) of the sub-event 1205. For example, the information may include data (e.g., data for BIS_spacing 1209) for indicating an anchor point of the second BIS event. For example, the BIS_spacing 1209 may be set, identified, or determined, so that a packet received through the sub-event 1205 and a packet received through the sub-event 1212 are distinct from each other. For example, the BIS_spacing 1209 may be set, identified, or determined, based on an error range 1220 (e.g., about 20 microseconds (µs)) capable of being caused according to an operation of component (e.g., hardware component) of an external electronic device (e.g., the external electronic device 205) that receives a packet broadcasted through the sub-event 1205 and a packet broadcasted through the sub-event 1212. For example, the BIS_spacing 1209 may be set, identified, or determined so that the packet received through the sub-event 1212 and a packet received through the sub-event 1207 are distinct from each other. For example, the BIS_spacing 1209 may be set, identified, or determined based on the error range 1220.

As described above, the information on the BIG event provided from the first electronic device 201 to the second electronic device 202 may include data indicating transmission timing of packets broadcasted from the first electronic device 201 and the second electronic device 202, respectively.

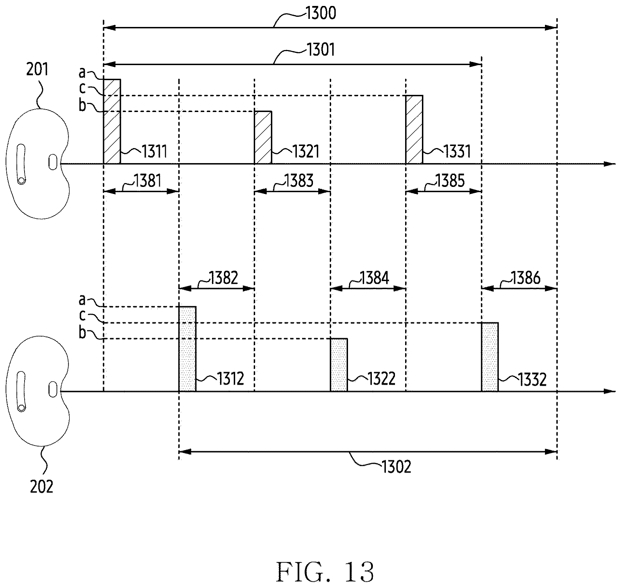

For example, the information for the broadcast service may include information for synchronizing a transmit power of a packet broadcasted from the first electronic device 201 and a transmit power of a packet broadcasted from the second electronic device 202. The information is illustrated and described in greater detail below with reference to FIG. 13.

FIG. 13 illustrates an example of a transmit power of at least one first packet and transmit power of at least one second packet, which are changed according to information for a broadcast service.

Referring to FIG. 13, a first electronic device 201 may transmit or provide information for synchronizing a transmit power of broadcast executed by the first electronic device 201 in a transmit power of broadcast executed by a second electronic device 202.

For example, the first electronic device 201 may schedule or identify a BIG event 1300. The BIG event 1300 may include a first BIS event 1301 for the first electronic device 201 and a second BIS event 1302 for the second electronic device 202. As a non-limiting example, the first BIS event 1301 and the second BIS event 1302 may have an interleaved arrangement within the BIG event 1300.

For example, the first BIS event 1301 may include a sub-event 1381, a sub-event 1383, and a sub-event 1385, and the second BIS event 1302 may include a sub-event 1382, a sub-event 1384, and a sub-event 1386.

For example, the first electronic device 201 may transmit, provide, or indicate information for synchronizing a transmit power of a packet (e.g., the at least one first packet) broadcasted through the first BIS event 1301 in a transmit power of a packet (e.g., the at least one second packet) broadcasted through the second BIS event 1302.

For example, the first electronic device 201 may broadcast a packet 1311 in a transmit power a, through the sub-event 1381. For example, the second electronic device 202 may identify a transmit power of a packet 1312 as the transmit power a based on the information, and broadcast the packet 1312 in the transmit power a through the sub-event 1382.

For example, the information transmitted or provided to the second electronic device 202 may further indicate a change in transmit power. As a non-limiting example, the first electronic device 201 may broadcast a packet 1321 in a transmit power b less than the transmit power a through the sub-event 1383. For example, the second electronic device 202 may identify a transmit power of a packet 1322 as the transmit power b less than the transmit power a based on the information, and broadcast the packet 1322 in the transmit power b through the sub-event 1384.

As a non-limiting example, the first electronic device 201 may broadcast a packet 1331 in a transmit power c less than the transmit power a and greater than the transmit power b through the sub-event 1385. For example, the second electronic device 202 may identify a transmit power of a packet 1332 as the transmit power c less than the transmit power a and greater than the transmit power b based on the information, and broadcast the packet 1332 in the transmit power c through the sub-event 1386.

For example, the first electronic device 201 may synchronize a reception quality of a packet broadcasted from the first electronic device 201 with a reception quality of a packet broadcasted from the second electronic device 202, by providing the information on the transmit power to the second electronic device 202.

For example, a state of the second electronic device 202 (or the first electronic device 201) may be changed while providing the broadcast service. As a non-limiting example, when a battery level of the second electronic device 202 is reduced to less than a minimum level for providing the broadcast service unlike a battery level of the first electronic device 201, the broadcast service through the second electronic device 202 may be ceased. As a non-limiting example, when a difference value between the battery level of the first electronic device 201 and the battery level of the second electronic device 202 is higher than a reference value, the broadcast service through the second electronic device 202 may be ceased. As a non-limiting example, the cessation of the broadcast service through the second electronic device 202 may be replaced by reducing a transmit power used for the broadcast service through the second electronic device 202.

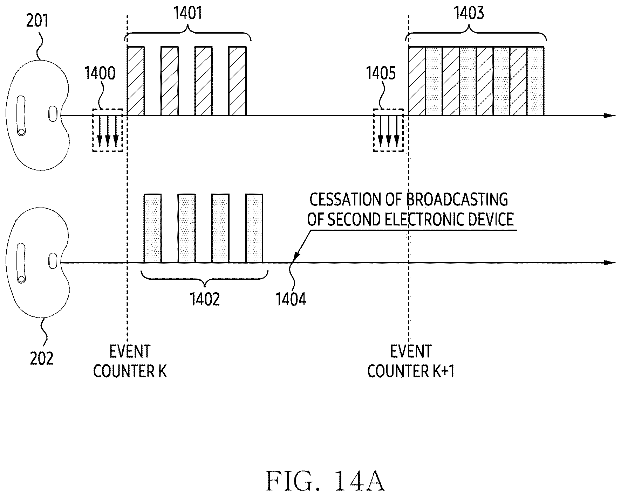

For example, when the broadcast service through the second electronic device 202 is ceased, the first electronic device 201 may compensate or assist the broadcast service through the second electronic device 202. An operation of the first electronic device 201 for the compensation is illustrated and described in greater detail below with reference to FIG. 14A.

FIG. 14A illustrates an exemplary method of broadcasting a packet for a second audio signal using a first electronic device according to a change in a state of a second electronic device.

Referring to FIG. 14A, a first electronic device 201 may execute a periodic advertisement 1400. For example, the periodic advertisement 1400 may be executed for indicating a BIG event corresponding to an event counter K (K is any natural number greater than or equal to 1). For example, the periodic advertisement 1400 may include a first BIS event for the first electronic device 201 and a second BIS event for a second electronic device 202.

For example, the first electronic device 201 may broadcast packets 1401 through the first BIS event in the BIG event corresponding to the event counter K, for the broadcast service. For example, the second electronic device 202 may broadcast packets 1402 through a second BIS event in the BIG event corresponding to event K, for the broadcast service. For example, unlike the first electronic device 201, the second electronic device 202 may cease executing broadcast of the second electronic device 202 at timing 1404, for the broadcast service. As a non-limiting example, since the first electronic device 201 is a device paired with the second electronic device 202, the first electronic device 201 may identify the cessation.

For example, in response to identifying the cessation, the first electronic device 201 may indicate replacing the broadcast executed by the second electronic device 202 with the broadcast executed by the first electronic device 201, through a periodic advertisement 1405 executed before an anchor point (or a start point) of a BIG event corresponding to an event counter K+1.

For example, the first electronic device 201 may broadcast packets 1403 obtained by the first electronic device 201 through the BIG event corresponding to the event counter K+1, for the broadcast service. As a non-limiting example, the packets 1403 may include packets of an audio channel supported by the first electronic device 201 as well as packets of an audio channel supported by the second electronic device 202.

FIG. 14A illustrates an example indicating that the periodic advertisement 1405 replaces the broadcast executed by the second electronic device 202 with the broadcast executed by the first electronic device 201, but it is merely an example. For example, the periodic advertisement 1405 may be executed to inform the information for the broadcast service changed according to the cessation of the broadcast executed by the second electronic device 202 to external electronic devices around the first electronic device 201.

The description of FIGS. 4 to 14A describes that the first electronic device 201 and the second electronic device 202 provide the broadcast service through a BIG event, but it is merely an example. For example, the first electronic device 201 and the second electronic device 202 may provide the broadcast service by executing broadcast through different BIG events. For example, the broadcast service may be provided by broadcasting at least one first packet through the first BIG event using the first electronic device 201 and broadcasting at least one second packet through the second BIG event using the second electronic device 202. Synchronizing the broadcast through the first BIG event with the broadcast through the second BIG event may be executed or achieved by providing the second electronic device 202 with the information for the broadcast service obtained by the first electronic device 201. For example, the information may include information on the program information and the broadcast identifier. For example, since external electronic devices around the first electronic device 201 and the second electronic device 202 may identify a relationship between the first BIG event and the second BIG event through the program information and the broadcast identifier, the first electronic device 201 may synchronize the broadcast through the first BIG event and the broadcast through the second BIG event, by providing the program information and the information on the broadcast identifier to the second electronic device 202.

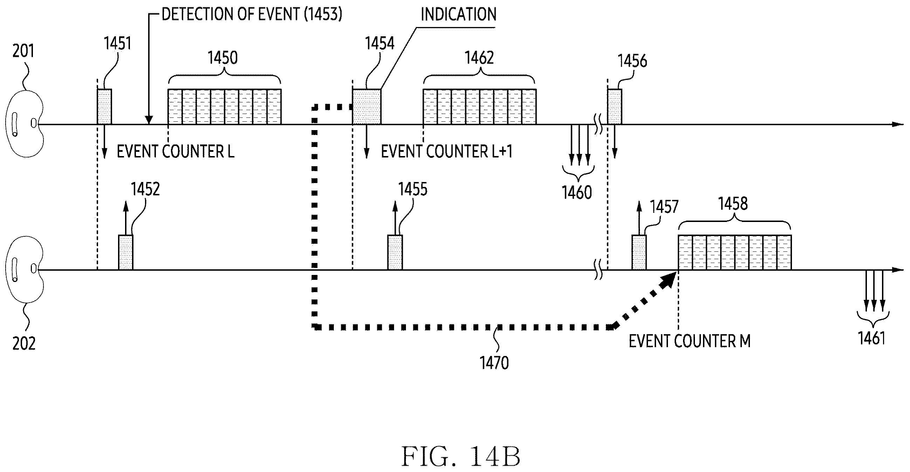

The description of FIGS. 4 to 14A describes providing the broadcast service through a BIG event including two BIS events (e.g., the first BIS event and the second BIS event), but it is merely an example. For example, a BIG event obtained, generated, or scheduled by the first electronic device 201 may include only a single BIS event (or a BIS event). For example, in order to provide the broadcast service through a BIG event including a single BIS event, the first electronic device 201 may obtain an audio signal using a microphone 313, and broadcast at least one packet obtained based on the audio signal through the single BIS event in the BIG event. For example, the broadcast service may be provided in mono sound through the BIG event including the single BIS event. Since the broadcast service is provided in mono sound, the second electronic device 202 may not be used for the broadcast service while the first electronic device 201 is used for the broadcast service. For example, while the first electronic device 201 is enabled (or activated) with respect to the broadcast service, the second electronic device 202 may be disabled (or deactivated) with respect to the broadcast service. For example, a state of the first electronic device 201 with respect to the broadcast service may be different from a state of the second electronic device 202 with respect to the broadcast service. For example, due to a difference between the state of the first electronic device 201 and the state of the second electronic device 202, a handover from the first electronic device 201 to the second electronic device 202 may be performed for the broadcast service. The handover is illustrated and described in greater detail below with reference to FIG. 14B.

FIG. 14B illustrates an example of a handover from a first electronic device to a second electronic device performed for a broadcast service provided in mono sound.

Referring to FIG. 14B, the first electronic device 201, among the first electronic device 201 and a second electronic device 202, may obtain audio signals for the broadcast service provided in mono sound. The first electronic device 201 may generate, obtain, or schedule a BIG event including a single BIS event, in order to broadcast packets for the audio signals. The first electronic device 201 may broadcast the packets through the BIG event including the single event. For example, the first electronic device 201 may broadcast packets 1450 for outputting audio signals obtained by the first electronic device 201, through the BIG event (e.g., an event counter L) including the single BIS event.

For example, the first electronic device 201 may periodically transmit packets (e.g., protocol data unit (PDU)) for connection (or communication link, or pairing) between the first electronic device 201 and the second electronic device 202 to the second electronic device 202 through the communication link between the first electronic device 201 and the second electronic device 202. For example, based on receiving the packet, the second electronic device 202 may transmit a response packet of the packet to the first electronic device 201 through the communication link between the first electronic device 201 and the second electronic device 202. As a non-limiting example, the first electronic device 201 may transmit a packet 1451 to the second electronic device 202 through the communication link between the first electronic device 201 and the second electronic device 202 according to periodic transmission, before broadcasting the packets 1450 through the BIG event including the single BIS event. For example, based on receiving the packet 1451, the second electronic device 202 may transmit a response packet 1452 of the packet 1451 to the first electronic device 201 through the communication link between the first electronic device 201 and the second electronic device 202.

For example, the first electronic device 201 may detect an event for executing (or performing) a handover from the first electronic device 201 to the second electronic device 202 in relation to the broadcast service provided in mono sound. For example, the event may be defined within the first electronic device 201 (and/or the second electronic device 202) to trigger a handover from the first electronic device 201 to the second electronic device 202. As a non-limiting example, the event may include a remaining level of a battery of the first electronic device 201 reaching a reference level. As a non-limiting example, the event may include that a difference value between the remaining level of the battery of the first electronic device 201 and a remaining level of a battery of the second electronic device 202 is higher than a threshold value. As a non-limiting example, the event may include a change in a wearing state of the first electronic device 201 (e.g., the first electronic device 201 being detached from a part (e.g., ears) of the user's body). For example, the event may include receiving a user request (or user input) (e.g., a tap input with respect to a housing of the first electronic device 201 or an input for changing a posture of the first electronic device 201) indicating to perform the handover.

As a non-limiting example, the first electronic device 201 may detect the event based on the response packet 1452. For example, the response packet 1452 may include information on the remaining level (e.g., 61 %) of the battery of the second electronic device 202. For example, the first electronic device 201 may perform (or execute) detection 1453 of the event, by identifying that a difference value (e.g., 6 percent (%)) between the remaining level (e.g., 55 %) of the battery of the first electronic device 201 and the remaining level (e.g., 61 %) of the battery of the second electronic device 202 is higher than a threshold value (e.g., 5 %).

For example, in response to the event, the first electronic device 201 may determine to execute (or perform) a handover from the first electronic device 201 to the second electronic device 202 in relation to the broadcast service provided in mono sound. For example, the handover may indicate to obtain audio signals for the broadcast service provided in mono sound and change a device for broadcasting packets for outputting the obtained audio signals for the broadcast service provided in mono sound from the first electronic device 201 to the second electronic device 202. For example, in response to the event, the first electronic device 201 may determine to perform the handover from the BIG event (including the single BIS event) corresponding to an event counter M.

For example, the first electronic device 201 may transmit a packet 1454 including an indication to the second electronic device 202 through the communication link between the first electronic device 201 and the second electronic device 202, based on the detection 1453 of the event. For example, the indication may indicate that the second electronic device 202 broadcasts packets for the broadcast service provided in mono sound from the BIG event (including the single BIS event) corresponding to the event counter M. For example, the indication may be included in the packet 1454 to request the handover. For example, since the packet 1454 includes the indication, a size (or waveform) of the packet 1454 may be different from a size (or waveform) of the packet 1451.

For example, the second electronic device 202 may receive the packet 1454 including the indication from the first electronic device 201, through the communication link between the first electronic device 201 and the second electronic device 202. For example, based on the packet 1454, the second electronic device 202 may recognize to broadcast the packets for the broadcast service provided in mono sound through the BIG event corresponding to the event counter M. For example, based on the packet 1454, the second electronic device 202 may recognize that the handover for broadcasting the packets through the BIG event corresponding to the event counter M is performed.

For example, based on receiving the packet 1454, the second electronic device 202 may transmit a response packet 1455 of the packet 1454 to the first electronic device 201, through the communication link between the first electronic device 201 and the second electronic device 202.

For example, the first electronic device 201 may broadcast packets 1452 for outputting audio signals obtained by the first electronic device 201, through the BIG event including the single BIS event and corresponding to the event counter L+1 (L+1 is less than M). As a non-limiting example, packets 1462 may be broadcasted after transmitting the packet 1454.

As a non-limiting example, the first electronic device 201 may execute a periodic advertisement 1460 indicating the BIG event (including the single BIS event) corresponding to an event counter greater than the event counter L+1 and less than the event counter M, after broadcasting the packets 1462.

As a non-limiting example, the first electronic device 201 may transmit a packet 1456 for a function corresponding to a function of the packet 1451 to the second electronic device 202, through the communication link between the first electronic device 201 and the second electronic device 202. For example, the second electronic device 202 may transmit a response packet 1457 of the packet 1456 to the first electronic device 201 through the communication link between the first electronic device 201 and the second electronic device 202.

For example, as indicated by arrow 1470, the second electronic device 202 may obtain, schedule, or generate the BIG event (e.g., event counter M) including the single BIS event based on the packet 1454 including the indication. For example, the second electronic device 202 may obtain audio signals instead of the first electronic device 201, based on the packet 1454 including the indication. For example, the second electronic device 202 may obtain packets 1458 for outputting the audio signals, based on the packet 1454 including the indication. For example, the second electronic device 202 may broadcast the packets 1458 through the BIG event (e.g., event counter M) including the single BIS event, based on the packet 1454 including the indication. For example, a device that broadcasts packets for the broadcast service provided in mono sound may be changed from the first electronic device 201 to the second electronic device 202, according to the handover indicated by the indication.

As a non-limiting example, after broadcasting the packets 1458, the second electronic device 202 may execute a periodic advertisement 1461 indicating the BIG event (including the single BIS event) corresponding to an event counter M+1. For example, the periodic advertisement 1461 may be executed for the broadcast service broadcasted in mono sound. For example, a device that performs (or executes) a periodic advertisement for the broadcast service may be changed from the first electronic device 201 to the second electronic device 202, according to the handover indicated by the indication.

As a non-limiting example, the handover from the first electronic device 201 to the second electronic device 202 may be unnoticeable to another device (e.g., the external electronic device 241, the external electronic device 242, the external electronic device 205, the external electronic device 251, and/or the external electronic device 252 in FIG. 2). For example, another device (e.g., the external electronic device 241, the external electronic device 242, the external electronic device 205, the external electronic device 251, and/or the external electronic device 252 in FIG. 2) around the first electronic device 201 and the second electronic device 202 may recognize the packets 1458 as packets broadcasted from the first electronic device 201.

FIG. 14B illustrates an example of maintaining a role of the first electronic device 201 as a primary device or master device independent (or regardless) of the detection 1453 of the event, but it is merely an example. For example, the role of the first electronic device 201 may be changed to a secondary device in response to the detection 1453 of the event. For example, when the role of the first electronic device 201 is changed to the secondary device, the packet 1456 may be transmitted from the second electronic device 202 to the first electronic device 201, and the response packet 1457 may be transmitted from the first electronic device 201 to the second electronic device 202.

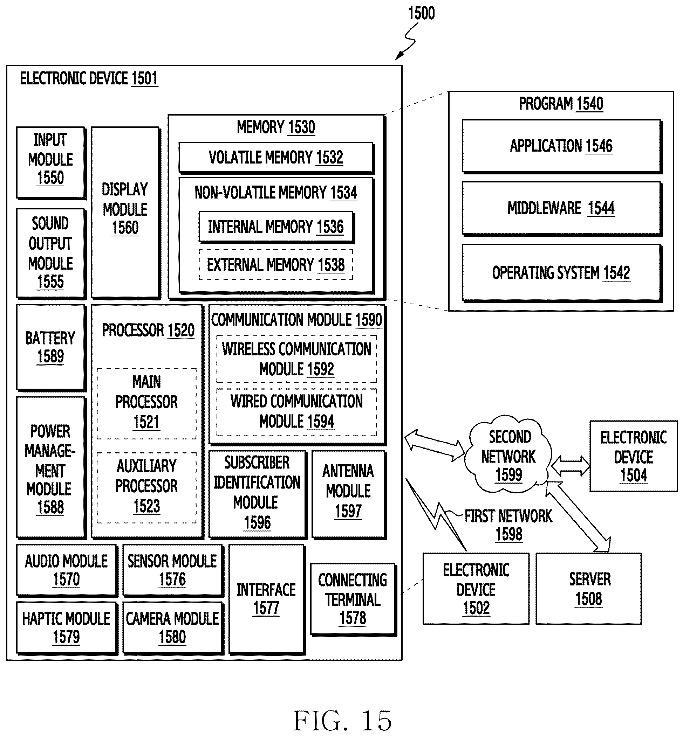

The operations of each of the first electronic device 201 and the second electronic device 202 illustrated above may be executed by an electronic device 1502 of FIG. 15.

FIG. 15 is a block diagram illustrating an electronic device 1501 in a network environment 1500 according to various embodiments. Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module (SIM) 1596, or an antenna module 1597. In various embodiments, at least one of the components (e.g., the connecting terminal 1578) may be omitted from the electronic device 1501, or one or more other components may be added in the electronic device 1501. In various embodiments, some of the components (e.g., the sensor module 1576, the camera module 1580, or the antenna module 1597) may be implemented as a single component (e.g., the display module 1560).

The processor 1520 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, a HDMI connector, a USB connector, a SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth^{™}, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 1564dB or less) for implementing mMTC, or U-plane latency (e.g., 0.5ms or less for each of downlink (DL) and uplink (UL), or a round trip of 15ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element including a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In an embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

As described above, a first electronic device may comprise a microphone, a communication circuit, at least one processor comprising processing circuitry, and memory, comprising one or more storage mediums, storing instructions. The instructions, when executed by the at least one processor individually and/or collectively, may cause the first electronic device to identify a request of a broadcast service to provide, based on synchronizing a second audio signal obtained via a microphone of a second electronic device with a first audio signal obtained via the microphone of the first electronic device, the first audio signal and the second audio signal to at least one external electronic device (e.g., within a specified distance of) around the first electronic device and the second electronic device; according to the request, transmit, using the communication circuit, to the second electronic device, information for a broadcast isochronous group (BIG) event including a first broadcast isochronous stream (BIS) event for the first electronic device and a second BIS event for the second electronic device; and broadcast, using the communication circuit, at least one first packet through the first BIS event to synchronize the first audio signal with the second audio signal provided by broadcasting from the second electronic device at least one second packet through the second BIS event identified based on the information.

The instructions, when executed by the at least one processor individually and/or collectively, may cause the first electronic device to identify the request based on an input caused with respect to the first electronic device.

The instructions, when executed by the at least one processor individually and/or collectively, may cause the first electronic device to identify the request, based on receiving, using the communication circuit, a signal for the request through a link between the first electronic device and an external electronic device from the external electronic device, wherein the external electronic device is distinct from the at least one external electronic device.

The instructions, when executed by the at least one processor individually and/or collectively, may further cause the first electronic device to identify the information based on the signal received from the external electronic device.

The information may be usable for identifying an anchor point of the second BIS event.

The information may be usable for identifying an access address for the second BIS event.

The instructions, when executed by the at least one processor individually and/or collectively, may further cause the first electronic device to, according to the request, transmit, using the communication circuit, to the second electronic device, information on a type of an audio channel allocated to the second electronic device for the broadcast service.

The instructions, when executed by the at least one processor individually and/or collectively, may further cause the first electronic device to, according to the request, transmit, using the communication circuit, to the second electronic device, information on an identifier used for broadcasting the least one second packet.

The instructions, when executed by the at least one processor individually and/or collectively, may further cause the first electronic device to, according to the request, transmit, using the communication circuit, to the second electronic device, program information for the broadcast service.

The instructions, when executed by the at least one processor individually and/or collectively, may further cause the first electronic device to, according to the request, transmit, using the communication circuit, to the second electronic device, information on a periodic advertisement for indicating the first BIS event and the second BIS event.

The instructions, when executed by the at least one processor individually and/or collectively, may cause the first electronic device to transmit, via a communication link between the first electronic device and the second electronic device, the information to the second electronic device.

The instructions, when executed by the at least one processor individually and/or collectively, may cause the first electronic device to transmit, using the communication circuit, to the second electronic device, via the communication link, a first signal for inquiring whether to generate a BIG event; and based on receiving, via the communication link, from the second electronic device, a second signal indicating to generate a BIG event, transmit, via the communication link, to the second electronic device, the information.

The instructions, when executed by the at least one processor individually and/or collectively, may cause the first electronic device to, based on the information being transmitted, receive, via the communication link, from the second electronic device, a third signal requesting to at least partially change the information; transmit, via the communication link, to the second electronic device, the information at least partially changed according to the third signal; receive, via the communication circuit, from the second electronic device, a fourth signal indicating to grant the information at least partially changed; and broadcast, based on the fourth signal, the at least one first packet through the first BIS event in the BIG event generated according to the information at least partially changed.

The instructions, when executed by the at least one processor individually and/or collectively, may cause the first electronic device to transmit the information through executing a periodic advertisement of a packet including the information.

The instructions, when executed by the at least one processor individually and/or collectively, may further cause the first electronic device to transmit, to the second electronic device, information to synchronize obtaining the second audio signal using the microphone of the second electronic device with obtaining the first audio signal using the microphone of the first electronic device.

The instructions, when executed by the at least one processor individually and/or collectively, may further cause the first electronic device to transmit, to the second electronic device, information to synchronize encoding the second audio signal obtained using the microphone of the second electronic device with encoding the first audio signal obtained using the microphone of the first electronic device.

The instructions, when executed by the at least one processor individually and/or collectively, may further cause the first electronic device to transmit, to the second electronic device, information to identify a map of a channel used for broadcasting the at least one first packet and the at least one second packet.

The instructions, when executed by the at least one processor individually and/or collectively, may further cause the first electronic device to transmit, to the second electronic device, information for identifying a transmit power of the at least one second packet.

As described above, a first electronic device may comprise a microphone, a communication circuit, at least one processor comprising processing circuitry, and memory, comprising one or more storage mediums, storing instructions. The instructions, when executed by the at least one processor individually and/or collectively, may cause the first electronic device to receive, from a second electronic device, using the communication circuit, information for a broadcast isochronous group (BIG) event; identify, according to the information, a first broadcast isochronous stream (BIS) event for the first electronic device included in the BIG event to synchronize a first audio signal obtained using the microphone of the first electronic device with a second audio signal obtained using a microphone of the second electronic device; and broadcast, using the communication circuit, at least one first packet through the first BIS event to synchronize the first audio signal with the second audio signal provided by broadcasting at least one second packet from the second electronic device through a second BIS event included in the BIG event.

The instructions, when executed by the at least one processor individually and/or collectively, may cause the first electronic device to identify the first BIS event, based on identifying an anchor point of the first BIS event according to the information.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A first electronic device comprising:
a microphone;
a communication circuit;
at least one processor comprising processing circuitry; and
memory, comprising one or more storage mediums, storing instructions that, when executed by the at least one processor individually and/or collectively, cause the first electronic device to:
identify a request of a broadcast service to provide, based on synchronizing a second audio signal obtained via a microphone of a second electronic device with a first audio signal obtained via the microphone of the first electronic device, the first audio signal and the second audio signal to at least one external electronic device around the first electronic device and the second electronic device;
according to the request, transmit, using the communication circuit, to the second electronic device, information for a broadcast isochronous group (BIG) event including a first broadcast isochronous stream (BIS) event for the first electronic device and a second BIS event for the second electronic device; and
broadcast, using the communication circuit, at least one first packet through the first BIS event to synchronize the first audio signal with the second audio signal provided by broadcasting from the second electronic device at least one second packet through the second BIS event identified based on the information.

2. The first electronic device of claim 1, wherein the instructions, when executed by the at least one processor individually and/or collectively, cause the first electronic device to:
identify the request based on a user input caused with respect to the first electronic device.

3. The first electronic device of claim 1, wherein the instructions, when executed by the at least one processor individually and/or collectively, cause the first electronic device to:
identify the request, based on receiving, using the communication circuit, a signal for the request through a link between the first electronic device and an external electronic device from the external electronic device, and
wherein the external electronic device is distinct from the at least one external electronic device.

4. The first electronic device of claim 3, wherein the instructions, when executed by the at least one processor individually and/or collectively, cause the first electronic device to identify the information based on the signal received from the external electronic device.

5. The first electronic device of claim 1, wherein the information is usable for identifying an anchor point of the second BIS event.

6. The first electronic device of claim 1, wherein the information is usable for identifying an access address for the second BIS event.

7. The first electronic device of claim 1, wherein the instructions, when executed by the at least one processor individually and/or collectively, cause the first electronic device to:
according to the request, transmit, using the communication circuit, to the second electronic device, information on a type of an audio channel allocated to the second electronic device for the broadcast service.

8. The first electronic device of claim 1, wherein the instructions, when executed by the at least one processor individually and/or collectively, cause the first electronic device to:
according to the request, transmit, using the communication circuit, to the second electronic device, information on an identifier used for broadcasting the least one second packet.

9. The first electronic device of claim 1, wherein the instructions, when executed by the at least one processor individually and/or collectively, cause the first electronic device to:
according to the request, transmit, using the communication circuit, to the second electronic device, program information for the broadcast service.

10. The first electronic device of claim 1, wherein the instructions, when executed by the at least one processor individually and/or collectively, cause the first electronic device to:
according to the request, transmit, using the communication circuit, to the second electronic device, information on a periodic advertisement indicating the first BIS event and the second BIS event.

11. The first electronic device of claim 1, wherein the instructions, when executed by the at least one processor individually and/or collectively, cause the first electronic device to:
transmit, via a communication link between the first electronic device and the second electronic device, the information to the second electronic device.

12. The first electronic device of claim 11, wherein the instructions, when executed by the at least one processor individually and/or collectively, cause the first electronic device to:
transmit, using the communication circuit, to the second electronic device, via the communication link, a first signal inquiring whether to generate a BIG event; and
based on receiving, via the communication link, from the second electronic device, a second signal indicating to generate a BIG event, transmit, via the communication link, to the second electronic device, the information.

13. The first electronic device of claim 12, wherein the instructions, when executed by the at least one processor individually and/or collectively, cause the first electronic device to:
based on the information being transmitted, receive, via the communication link, from the second electronic device, a third signal requesting to at least partially change the information;
transmit, via the communication link, to the second electronic device, the information at least partially changed according to the third signal;
receive, via the communication circuit, from the second electronic device, a fourth signal indicating to grant the information at least partially changed; and
broadcast, based on the fourth signal, the at least one first packet through the first BIS event in the BIG event generated according to the information at least partially changed.

14. The first electronic device of claim 1, wherein the instructions, when executed by the at least one processor individually and/or collectively, cause the first electronic device to:
transmit the information through executing a periodic advertisement of a packet including the information.

15. The first electronic device of claim 1, wherein the instructions, when executed by the at least one processor individually and/or collectively, cause the first electronic device to:
transmit, to the second electronic device, information to synchronize obtaining the sec ond audio signal using the microphone of the second electronic device with obtaining the first au dio signal using the microphone of the first electronic device.
